Europäisches Patentamt

European Patent Office

Office européen des brevets

(11) Numéro de publication: **0 017 892**
**B1**

(12) **FASCICULE DE BREVET EUROPEEN**

(45) Date de publication du fascicule du brevet: 27.04.83

(21) Numéro de dépôt: 80101855.7

(22) Date de dépôt: 08.04.80

(51) Int. Cl.³: **H 02 J 9/06, H 02 J 7/10**

(54) Dispositif de commutation automatique de deux batteries chargées en parallèle et déchargées en série.

(30) Priorité: 13.04.79 FR 7909469
06.12.79 FR 7929942

(43) Date de publication de la demande:
29.10.80 Bulletin 80/22

(45) Mention de la délivrance du brevet:
27.04.83 Bulletin 83/17

(84) Etats contractants désignés:
AT BE CH DE FR GB IT LI LU NL SE

(56) Documents cités:
FR - A - 1 210 406
FR - A - 1 492 820
FR - A - 1 505 032
FR - A - 2 139 769
GB - A - 1 428 661

(73) Titulaire: Société Anonyme dite SAFT
156, avenue de Metz
F-93230 Romainville (FR)

(72) Inventeur: Godard, Pierre
32, sixième Avenue
F-93290 Tremblay Les Gonesse (FR)
Inventeur: Billot, Michel
9, rue de L'Avant Garde
F-93700 Drancy (FR)

(74) Mandataire: Weinmiller, Jürgen et al,
Zeppelinstrasse 63
D-8000 München 80 (DE)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Dispositif de commutation automatique de deux batteries chargées en parallèle et déchargées en série

La présente invention concerne un dispositif de commutation automatique permettant la charge de deux batteries en parallèle par un circuit de charge et leur décharge en série dans une utilisation, comprenant deux organes d'interruption du circuit de charge et un organe de commande qui est constitué par l'association d'un premier transistor, d'une résistance et d'une diode, ledit transistor étant monté de telle sorte qu'il commute de l'état passant à l'état bloqué et inversément suivant la tension aux bornes de cette diode, les organes d'interruption et le transistor étant placés de telle sorte que les batteries sont chargées en parallèle lors d'un premier état du transistor et déchargées en série lors d'un deuxième état dudit transistor.

On connait déjà, notamment par le document FR—A 1 505 032, un dispositif du type cité ci-dessus; mais il concerne un appareil où les bornes entre lesquelles est connecté le chargeur et celles où est connectée l'utilisation sont distincts. Le dispositif automatique décrit dans le brevet anglais n° 1 428 661 présente des paires de bornes communes, mais il présente l'inconvénient d'avoir une consommation permanente importante, les résistances de charge restant connectées en permanence.

La présente invention a pour but de fournir un dispositif où la commutation du montage des batteries se fait automatiquement, dans lequel les bornes d'utilisation et d'alimentation sont communes et qui présente une consommation négligeable.

Elle a pour objet un dispositif de commutation automatique du type décrit ci-dessus, caractérisé par le fait que ladite diode est connectée d'une part en parallèle au circuit base-émetteur dudit transistor et d'autre part entre la borne d'une polarité d'une première batterie et la borne de l'autre polarité de la seconde batterie, de façon que le courant de décharge des batteries parcourt cette diode en sens direct, en ce que ladite résistance est branchée en boucle rétroactive sur l'émetteur du transistor, renforçant ainsi l'état passant, et en ce que les deux organes d'interruption sont placés respectivement entre les bornes de même polarité des deux batteries, de telle sorte que les batteries sont chargées en parallèle lorsqu'ils sont passants, la première batterie à travers le premier organe d'interruption et la seconde batterie à travers le second organe d'interruption, lesdits organes étant commandés par ledit transistor, les circuits de charge et d'utilisation étant connectés directement aux bornes des batteries.

De cette manière, lorsque les batteries sont légèrement déchargées et que le circuit de charge est sous tension, la tension aux bornes de la première diode est inverse de la tension de conduction. Le premier transistor est polarisé par cette tension et devient conducteur, et l'effet de réaction fourni par la résistance complète la saturation du premier transistor qui commande les organes d'interruption, lesquels deviennent passants et provoquent la charge des batteries en parallèle.

Si le circuit de charge n'est plus alimenté, les deux batteries débitent dans le circuit d'utilisation et la diode laisse passer le courant entre les deux batteries qu'elle met en série. Le premier transistor se trouve bloqué et met les organes d'interruption dans l'état non conducteur.

Les organes d'interruption peuvent être de nature électronique (transistors par exemple), ou mécanique (relais à contacts). On peut leur associer une temporisation pour limiter le temps de charge.

Le premier transistor est connecté de façon à être à l'état bloqué lorsque les batteries sont en décharge.

Dans un premier mode de réalisation les deux organes de commutation sont constitués, le premier par une deuxième transistor et le second par un troisième transistor, le deuxième transistor étant connecté pour être commandé par le troisième transistor.

En variante, les deux organes d'interruption sont constitués le premier par un premier contact d'un relais dont l'excitation est commandé par le premier transistor et le second par un second contact dudit relais.

Dans ce dispositif, la diode est l'élément essentiel qui permet d'assurer la commutation du circuit de l'état de charge à l'état de décharge et vice-versa. Cependant la présence de cette diode entraîne une limitation dans l'application du dispositif. En effet, lorsqu'on dispose d'un chargeur à tension constante, habituellement prévu pour le recharge d'accumulateurs au plomb, on ne peut recharger avec ce chargeur des accumulateurs alcalins à une tension supérieure à la demi-somme de la valeur de la tension en charge du chargeur et de la tension inverse de la diode. Ainsi, avec un chargeur fournissant en charge 13,1 V, on ne pourra charger des batteries au delà de

$$\frac{13,1+0,7}{2}=6,9 \text{ V.}$$

Sie donc on veut augmenter la valeur maximale de charge des batteries, il y a lieu de changer de chargeur, ce qui n'est pas souhaitable pour les installations déjà existantes.

C'est pourquoi l'invention concerne également diverses variantes permettant de charger les batteries à une tension supérieure à la tension limite précitée.

Ces variantes sont caractérisées par le fait qu'entre ladite borne d'une polarité de la première batterie et ladite borne d'une autre polarité de la seconde batterie, on associe à ladite première diode un interrupteur commandé par des moyens qui en provoquent l'ouverture, interrompant le courant dans la diode, lorsque les batteries sont en charge, et qui en provoquent la fermeture, rétablissant le courant dans la diode, lorsque les batteries sont en décharge.

Dans un premier mode de réalisation, ledit interrupteur est un contact d'un relais, ledit contact étant disposé en série entre le pôle négatif de la seconde batterie et la première diode, la bobine d'excitation étant connectée entre le pôle positif de la seconde batterie et la cathode d'une diode dont l'anode est reliée à celle des extrémités de la résistance opposée à la diode, le relais étant agencé pour que le contact soit fermé lorsque la bobine n'est pas excitée.

Dans un second mode de réalisation, dans laquelle le premier organe d'interruption est constitué par un premier contact d'un relais dont l'excitation est commandée par le premier transistor et le second organe d'interruption par un deuxième contact dudit relais, ledit interrupteur est constituée par un troisième contact du relais mettant en série la batterie et la diode lorsque le relais n'est pas excité et mettant en liaison le pôle négatif de la batterie avec le pôle négatif du chargeur lorsque le relais est excité.

Dans un troisième mode de réalisation, la diode et l'interrupteur sont constitués par un thyristor dont la gâchette est reliée au point commun de deux résistances et d'un circuit comprenant en série aux bornes dudit thyristor les résistances et une diode Zener. Le thyristor se bloque lorsqu'une tension inverse se présente à ses bornes, en fin de décharge des batteries, ce qui assure la commutation série parallèle des batteries.

Dans un quatrième mode de réalisation, l'interrupteur est un contact commandé par un relais lui-même commandé par un premier transistor dont la base est reliée à la cathode de la diode par une résistance, ledit relais actionnant les organes d'interruption et, par l'intermédiaire d'un circuit de confirmation de la tension de chargeur qui comprend un transistor commandé par le transistor, et par l'intermédiaire d'un circuit à temporisation comprenant en série avec la bobine un transistor, dont la base est reliée au transistor par une diode Zener associée à un circuit à résistance et condensateur, la confirmation de l'état de tension du chargeur étant assuré grâce à deux résistances et respectivement reliées entre une des bornes du chargeur et l'une des extrémités de la résistance.

L'invention sera mieux comprise à l'aide des exemples qui vont suivre, en rapport avec le dessin annexé dans lequel:

— la figure 1 représente schématiquement un premier exemple de réalisation du dispositif selon l'invention.

— la figure 2 représente schématiquement un deuxième exemple de réalisation du dispositif selon l'invention.

— la figure 3 représente schématiquement un troisième exemple du dispositif selon l'invention.

— les figures 4 à 7 représentent quatre modes de réalisation d'une variant du dispositif permettant d'accroître la valeur de la tension de charge.

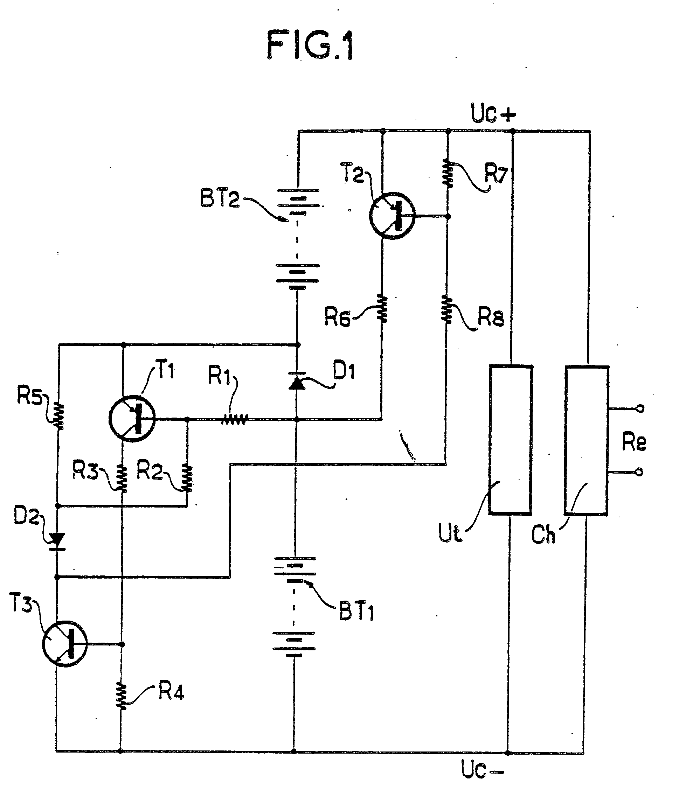

Dans la figure 1, on a représenté deux batteries BT1 et BT2 et une diode D1 dont l'anode est connectée à la borne positive de la batterie BT1 et la cathode à la borne négative de la batterie BT2. La borne négative de la batterie BT1 est connectée à une borne négative UC− commune à un circuit de charge (Ch) et à une utilisation (Ut) alimentée par le circuit de charge en temps normal. Le circuit de charge est alimenté par un réseau Re. La borne positive de la batterie BT2 est connectée à une borne positive UC+ commune au circuit de charge et à l'utilisation. Le point commun à l'anode de la diode D1 et à la borne positive de la batterie BT1 est connecté à travers une résistance R1 à la base d'un transistor pnp T1 dont l'émetteur est par ailleurs connecté au point commun à la cathode de la diode D1 et à la borne négative de la batterie BT2. Le collecteur du transistor T1 est connecté à travers deux résistances R3 et R4 à la borne UC−. Au point commun aux résistances R3 et R4 est connectée la base d'un transistor npn T3 dont l'émetteur est connecté à la borne UC−.

La borne négative de la batterie BT2 est connectée à travers une résistance R5 et une diode D2 au collecteur du transistor T3, la cathode de la diode D2 étant connectée au collecteur du transistor T3. Entre la base du transistor T1 et l'anode de la diode D2 est connectée une résistance R2.

Le point commun à la cathode de la diode D2 et à l'émetteur du transistor T3 est connectée à travers deux résistances R7 et R8 à la borne UC+. Le point commun aux résistances R7 et R8 est connecté à la base d'un transistor pnp T2 dont l'émetteur est connectée à la borne UC+ et dont le collecteur est connectée à travers une résistance R6 à la borne positive de la batterie BT1.

Le fonctionnement de ce dispositif est le suivant. Au début de la charge par le chargeur (Ch), la tension inverse aux bornes de la diode D1 polarise à travers la résistance R1 le transistor T1 qui conduit et commande le transistor T3. L'effet de réaction fourni par la résistance R2 augmente la polarisation du transistor T1 et le transistor T3 se sature. Par l'intermédiaire de la résistance R8 il commande le transistor T2 et les deux batteries se chargent en parallèle: BT1 à travers le circuit UC+, émetteur-collecteur du transistor T2, R6, BT1, UC−; BT2 à travers le circuit UC+, BT2, R5, D2, collecteur-èmetteur du transistor T3, UC−.

Tant que le chargeur (Ch) est sous tension, les bornes UC+ et UC− fournissent du courant aux batteries BT1 et BT2, du moins tant que leur tension de fin de charge n'est pas atteinte. Il faut toutefois pour cela que la tension entre UC+ et UC− ne soit pas inférieure à la tension des deux batteries BT1 et BT2 en série augmentée de la moitié environ de la tension directe de la diode D1. Il n'est en effet plus nécessaire d'avoir une tension inverse aux bornes de la diode D1 pour commander le transistor T1, la résistance R2 étant à ce moment prépondérante pour polariser le transistor T1 par son effet de réaction.

Si le courant vient à manquer dans le circuit de charge, les batteries BT1 et BT2 mises en séries par la diode D1 alimentent le circuit utilisation. Le transistor T1 se trouve polarisé en inverse par la résistance R1, ce qui entraîne le blocage des trois transistors T1, T2 et T3. On remarquera que du fait du blocage des transistors aucun courant ne passe dans les circuits partiels de charge particuliers à chacune des batteries pendant que les batteries débitent.

Bien entendu il est nécessaire que la somme des tensions de fin de décharge des batteries diminuée de la chute de tension directe dans la diode D1 soit acceptable par l'utilisation.

Il faut également préciser qu'il suffit de mettre l'ensemble des batteries BT1 et BT2 en circuit ouvert, par exemple par interruption de la charge mais sans utilisation, pour bloquer la décharge dans le circuit de charge: en effet, la décharge dans le circuit de charge polarise complètement la diode D1 et R1 inverse la polarisation de T1 et l'ensemble se bloque.

Remarquons qu'il serait possible sans grandes modifications de faire commander directement les deux transistors T2 et T3 chacun par un transistor complémentaire. On a cependant dans ce cas un moins bon synchronisme de l'établissement de la charge sur chaque batterie, d'où un déséquilibre de la charge.

De même, la diode D2 permet d'utiliser un seul transistor à deux potentiels différents. Il serait possible de la remplacer par un transistor supplémentaire, mais cette solution serait plus coûteuse.

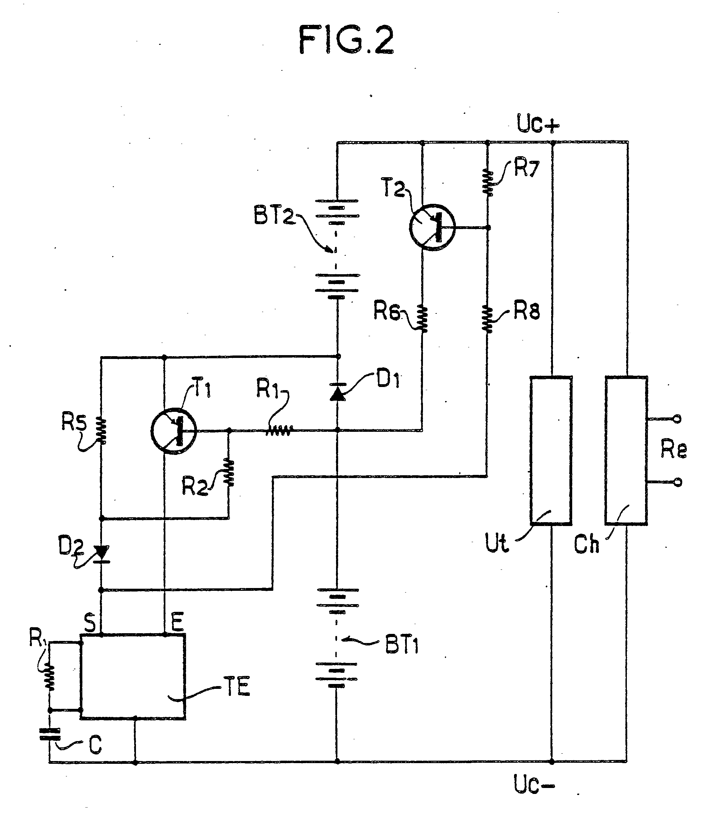

La figure 2 représente un dispositif analogue, mais où le transistor T3 a été remplacé par un circuit temporisateur.

On retrouve, dans la même disposition, tous les composants du circuit sauf le transistor T3 et les résistances R3 et R4 qui ont été remplacés par un circuit temporisateur TE qui comporte un compteur de 18 à 24 étages avec multivibrateur incorporé auquel on ajoute la résistance R et le condensateur C ayant le valeurs voulues pour obtenir le temps de charge recherché. Un tel circuir peut, par exemple, être celui commercialisé par la Société Motorola sous la référence 14521. L'entrée E du temporisateur passe à 1 par exemple quand le transistor T1 devient passant. Sa sortie S passe alors à 0 et la charge de la batterie BT2 est assurée à travers la temporisation, tandis que le transistor T2 devient passant et permet la charge de la batterie BT1. La sortie S revient à 1 après le temps déterminé par la fréquence fixée par les valeurs de R et C, et par le nombre d'étages du compteur.

Si le courant de charge n'est pas trop élevé, il peut traverser directement le compteur ainsi qu'il est représenté sur la figure. Sinon il est facile de commander par la sortie un transistor reliant la cathode de la diode D2 à UC−.

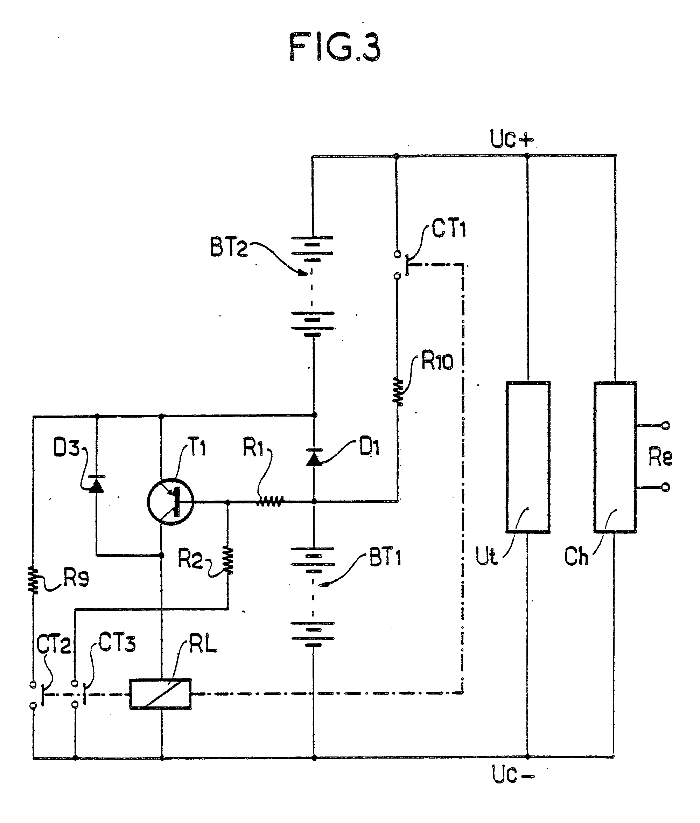

La figure 3 représente un autre exemple de réalisation qui peut être employé dans le cas où l'utilisation nécessite des tensions et des courants élevés.

Dans la figure 3, on retrouve les batteries BT1 et BT2 entre lesquelles est connectée la diode D1, de la même façon que dans les exemples précédents. Le courant du circuit de charge (Ch) arrive par les bornes UC+ et UC−, ou bien le courant de la batterie va à l'utilisation (Ut) par les mêmes bornes. On retrouve également le transistor T1 polarisé par le résistance R1, et aussi la résistance R2.

Par contre le collecteur du transistor T1 est maintenant connecté à l'enroulement d'un relais RL, connecté lui-même à la borne UC−. La borne négative de la batterie BT2 est connectée à travers une résistance R9 à un contact CT2 du relais RL qui, quand il est fermé, la relie à la borne UC−.

La borne positive de la batterie BT1 est connectée à travers une résistance R10 et un contact CT1 du relais RL à la borne UC+.

La résistance R2 est connectée à travers un contact CT3 du relais RL à la borne UC−. Une diode D3, placée aux bornes de la jonction émetteur-collecteur du transistor T1, protège celui-ci contre les intensités trop élevées.

Le fonctionnement de ce dispositif est tout à fait analogue à celui des exemples précédents. Lorsque le transistor T1 est passant, les contacts du relais RL se ferment et la résistance R2 augmente la polarisation du transistor T1. Les batteries sont chargées en parallèle à travers le contact CT1 et la résistance R10 pour BT1, et le contact CT2 et la résistance R9 pour BT2. Le blocage du transistor T1 amène l'ouverture des contacts, et les batteries débitent en série dans l'utilisation.

Il peut être avantageux de brancher en parallèle aux bornes de l'utilisation et du chargeur plusieurs ensembles selon l'invention.

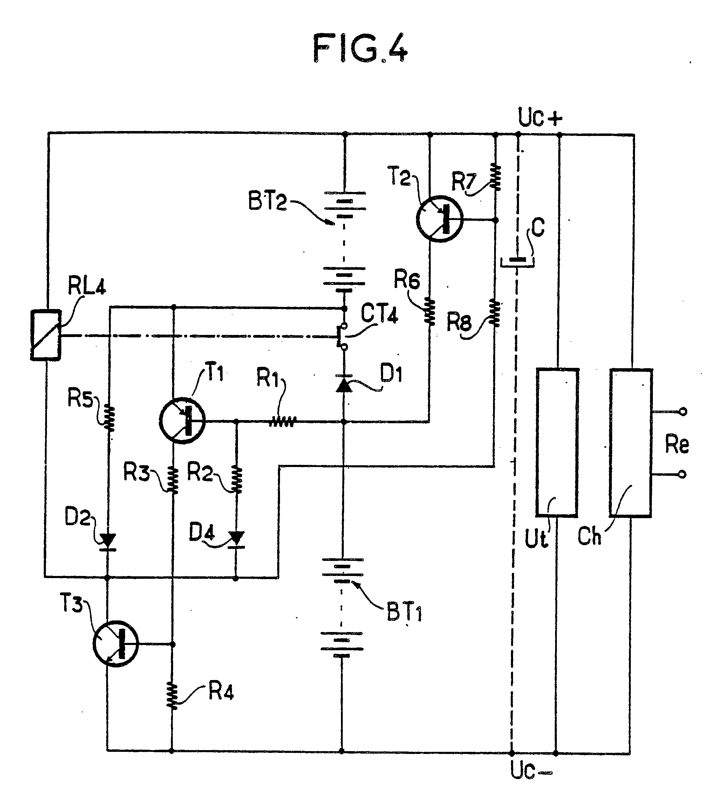

Les figures 4 à 7 représentent quatre modes de réalisation d'une variante dans laquelle un interrupteur est en série avec la diode.

Le dispositif représenté en figure 4 est sensiblement identique à celui de la figure 1, à part les modifications suivantes:

— en série avec le pôle négatif de la batterie et la diode D1 est placé le contact CT4 d'un relais dont la bobine d'excitation RL4 est connecté entre la borne positive du circuit et la cathode de la diode D2;

— et, une diode D4 est en outre placée en série avec la résistance R2, sa cathode étant reliée à la cathode de la diode D1.

Le relais RL4 est tel que lorsque la bobine n'est pas excitée le contact CT4 soit fermé.

Le fonctionnement du circuit est le suivant: lorsque le chargeur ne fonctionne pas, les batteries débitent dans l'utilisation, les transistors T1, T2 et T3 étant bloqués, le contact CT4 étant fermé; lorsque le chargeur est mis en route, la tension inverse ou bornes de la diode D1 polarise à travers la résistance R1 le transistor T1 qui conduit et commande le transistor T3, lequel par le courant de R8 commande le transistor T2. Les batteries se chargent alors en parallèle. La bobine du relais RL4 est alors traversée par un courant et commande l'ouverture du contact CT4. On peut alors charger les batteries à une tension supérieure à celle possible dans les schémas des figures 1 à 3.

En effet, on peut, à condition de prendre une valeur judicieuse de R2 et d'insérer une diode en série entre R2 et le collecteur de T3, atteindre entre le pôle positif de BT1 et la pôle négatif de BT2 une tension allant jusqu'à 3 Volts, avant que le blocage du transistor T1 ne survienne.

Ce qui, dans l'exemple donné précédemment, permet d'obtenir une charge allant jusqu'à 8,5 V par batterie (au lieu de 6,9 V environ).

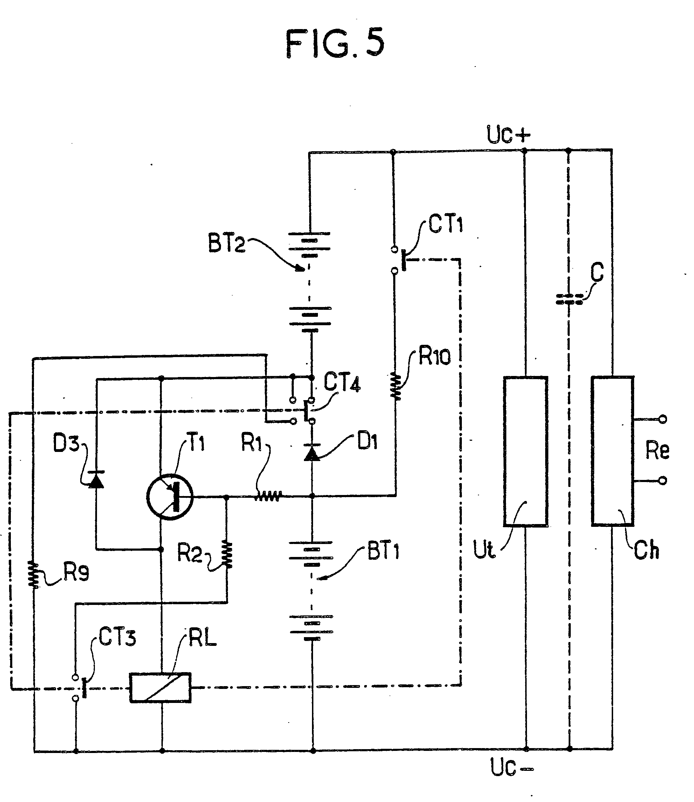

La figure 5 représente une variante de réalisation du dispositif dans lequel les transistors T2 et T3 sont remplacés respectivement par les contacts CT1 et CT3 d'un relais RL connecté entre le collecteur du transistor T1 et la borne VC. La résistance R2 est connectée à un contact CT3 du même relais. Le contact CT4 du montage de la figure 1 est commandé par le même relais RL. En l'absence de courant dans le relais RL, le contact CT4 met en série les deux batteries à travers la diode D1 alors que les contacts CT1 et CT3 sont ouverts.

Au moment de la commutation qui fait passer les bateries de la décharge à la charge, le transistor T1 conduit, son collecteur alimente le relais, ce qui place les batteries en parallèle. Le contact CT4 relie alors le pôle—de BT2 à la borne VC— à travers une résistance R9. Le relais, aussi bien dans la version de la figure 4 que dans celle de la figure 5, introduit un léger retard au moment de la commutation visant à mettre les batteries en décharge. Pour éviter toute coupure, il faut que la capacité de sortie du chargeur soit suffisante; celle-ci peut être augmentée grâce à une capacité 6 en parallèle sur ses bornes, représenté en traits interrompus dans les figures 4 et 5.

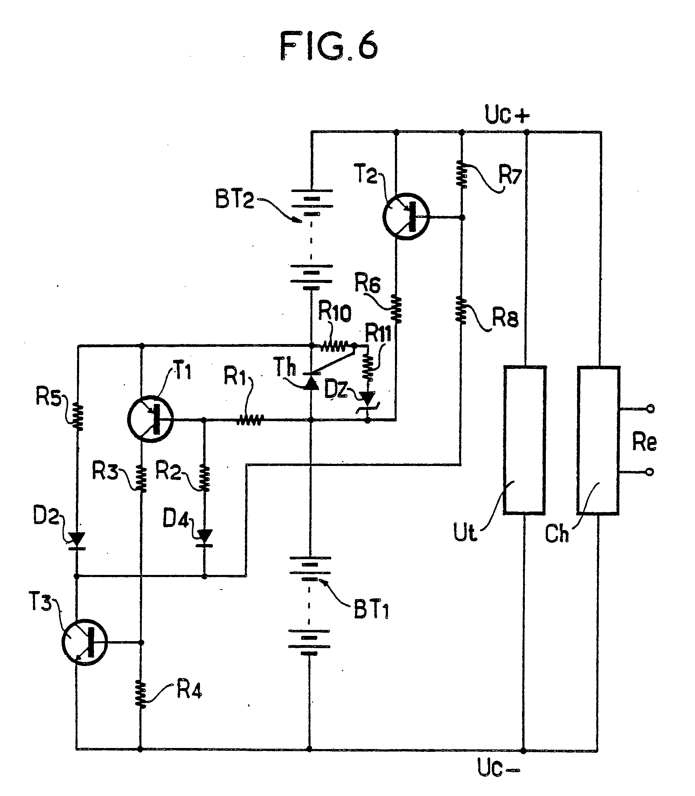

Dans la variante de réalisation représentée dans la figure 6, le schéma est identique à celui de la figure 4, le relais RL4, le contact CT4 et la diode D4 étant supprimé. La diode est remplacée par un thyristor Th dont la gâchette est reliée au point commun de deux résistances R10 et R11 d'un circuit série aux bornes du thyristors et comprenant en outre une diode Zener DZ.

Le thyristor se bloque naturellement quand une tension inverse se retrouve à ses bornes pour le démarrage de la charge. Il ne se réamorce que quand la charge est supprimée et qu'une utilisation est branchée aux bornes +U$_c$ et —U$_c$ et avec un seuil de tension donné par la diode Zener. L'amorçage est très rapide; ou ne constante pas d'interruption à l'arrêt de la charge.

Un inconvénient du thyristor est qu'il peut se désamorcer si le courant utilisation devient trop faible. C'est pourquoi le montage de la figure 6 est déconseillé pour des utilisations à courant très variable (par exemple dans un rapport supérieur à 10 entre le courant normal et le courant minimal), car il y a des risques de production d'oscillations de relaxation.

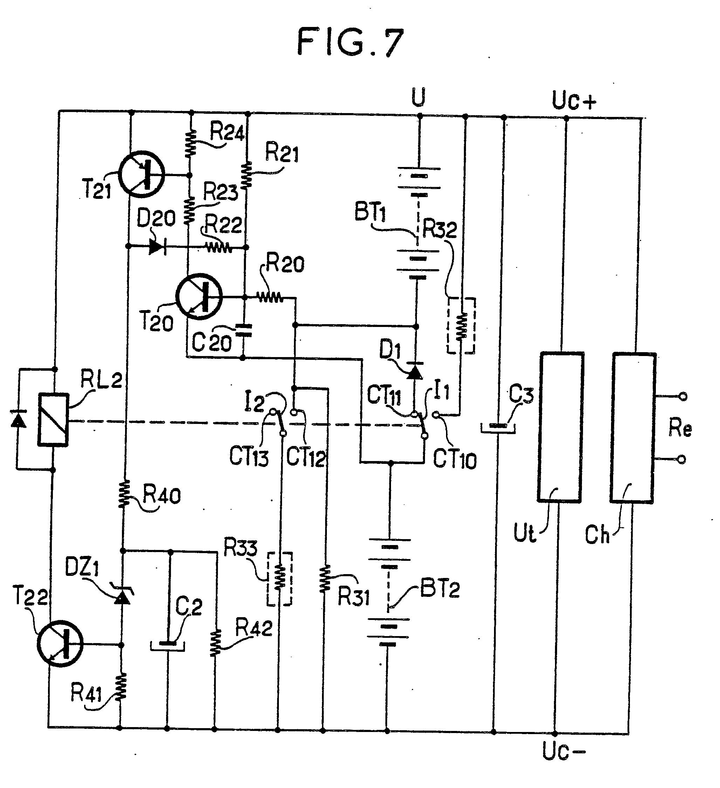

La figure 7 représente une variante de réalisation du dispositif de commutation de batteries. Dans le schéma de la figure 7, on a désigné par les mêmes références que dans les figures précédentes, les éléments communs aux figures, à savoir les batteries d'accumulateurs BT1 et BT2, les bornes U$_c$+ et U$_c$—, l'utilisation Ut, le chargeur ch et le réseau Rc.

Les organes d'interruption du circuit de charge, permettant la commutation des batteries d'accumulateurs du montage série (décharge) au montage parallèle (charge) et vice versa comprennent un premier inverseur I1 ayant une paire de contacts CT10 et C11 et un second inverseur I2 ayant une paire de contacts CT12 et CT13, les inverseurs étant commandés par un relais commun ayant un bobinage RL2. Lorsque les batteries sont au repos, ou lorsqu'elle débitent dans une utilisation, les contacts sont dans la position indiquée dans la figure, plaçant les batteries en série.

Un transistor npn T20 détecte la tension aux bornes de la diode D1. La base du transistor T20 est reliée: à CT2 et au pôle négatif de BT1 par une résistance R20; au pôle positif de BT2 par un condensateur C20; à la borne U$_c$+ par une résistance R21; au collecteur d'un transistor pnp T21 par une résistance R22 et une diode D20.

L'émetteur de transistor T20 est reliée au pôle positif de la batterie BT2. Enfin le collecteur du transistor T20 est reliée à la borne UCT par deux résistances en série R23 et R24. Au point commun à ces résistances est connecté le transistor T21.

Le contact CT12 est relié à la borne U$_c$—, par une résistance R31.

Le contact CT10 est relié à la borne U$_c$+ par une résistance R32.

Le contact CT13 est relié à la borne U$_c$— par une résistance R33.

La bobine RL2 du relais de commande des contacts est disposée en série avec un transistor npn T22; l'ensemble est en parallèle sur les bornes U$_c$+ et U$_c$—. La base du transistor T22 est polarisée par un circuit à temporisation comprenant, en série avec le collecteur du transistor T21, des résistances R40, R41 et une diode Zéner DZ2, et, en parallèle sur DZ2 et R41, un condensateur C2 et une résistance R42.

Le fonctionnement du dispositif est le suivant:

Lorsque la batterie est au repos ou alimentant une utilisation, les contacts sont dans la configuration indiquée dans la figure, mettant les batteries d'accumulateur en série. Tous les transistors sont bloqués, le relais n'est pas excité. Le courant dans R31 est sensiblement égal au courant dans R20 et R21 car R21 et R31 sont égales et grandes devant R20. La tension basse émetteur du transistor T20 est voisine du zéro en absence d'utilisation et négative si le courant d'utilisation est important. On notera que le courant de décharge des batteries, dû aux résistances R21 et R31 est faible: en effet, on peut choisir R21 et R31 suffisamment élevées, pour que ce courant soit inférieur au courant d'auto-décharge des accumulateurs.

A la mise sous tension du chargeur, la tension inverse aux bornes de la diode D1 (dont le seuil est déterminé par le rapport R20—R21), commande le transistor. Le courant d'émetteur de T20 commande la conduction du transistor T21, lequel assure la confirmation de l'état de T20. Après une temporisation, le transistor T22 devient passant, le relais RL2 est excité et les contacts CT0 et CT12 sont mis en service. Les batteries BT1 et BT2 se chargent respectivement à traverse les résistances R33 et R32.

Si l'utilisation l'impose, un condensateur C3 peut être placé en sortie de l'ensemble pour éviter le manque de tension utilisation pendant la manoeuvre du relais au manque secteur.

Le montage qui vient d'être décrit en référence à la figure 7 permet de charger efficacement les batteries, même si la somme des tensions des batteries est très supérieure à la tension du chargeur lorsque celui-ci débits vers les batteries. On ouvre comme dans le montage des figures 4 et 5 un contact en série avec la diode D1. Mais, il y a un autre avantage, qui est de confirmer la tension du chargeur lors du raccordement des batteries au chargeur avant que le relais ait basculé (grâce au circuit de temporisation du transistor T22 lui même commandé par le circuit de confirmation D20, R22, T21).

Ce montage permet d'utiliser des chargeurs dont la chute de tension est importante lorsqu'ils débitent un fort courant de charge.

## Revendications

1. Dispositif de commutation automatique permettant la charge de deux batteries (BT1, BT2) en parallèle par un circuit de charge (Ch) et leur décharge en série dans une utilisation (Ut), comprenant deux organes d'interruption du circuit de charge et un organe de commande qui est constitué par l'association d'un premier transistor (T1), d'une résistance (R2) et d'une diode (D1), ledit transistor étant monté de telle sorte qu'il commute de l'état passant à l'état bloque et inversément suivant la tension aux bornes de cette diode, les organes d'interruttion et le transistor étant placés de telle sorte que les batteries sont chargées en parallèle lors d'un premier état du transistor et déchargées en série lors d'un deuxième état dudit transistor, caractérisé par le fait que ladite diode (D1) est connectée d'une part en parallèle au circuit base-émetteur dudit transistor (T1) et d'autre part entre la borne d'une polarité d'une première batterie (BT1) et la borne de l'autre polarité de la seconde batterie (BT2), de façon que le courant de décharge des batteries parcourt cette diode en sens direct, en ce que ladite résistance (R2) est branchée en boucle rétroactive sur l'émetteur du transistor (T1), renforçant ainsi l'état passant, et en ce que les deux organes d'interruption (T2, T3; T2, TE; CT1, CT2) sont placés respectivement entre les bornes de même polarité des deux batteries (BT1, BT2), de telle sorte que les batteries sont chargées en parallèle lorsqu'ils sont passants, la première batterie à travers le premier organe d'interruption et la seconde batterie à travers le second organe d'interruption, lesdits organes étant commandés par ledit transistor, les circuits de charge et d'utilisation étant connectés directement aux bornes des batteries.

2. Dispositif selon la revendication 1, caractérisé par le fait que le premier transistor (T1) est connecté de façon à être à l'état bloqué lorsque les batteries sont en décharge.

3. Dispositif selon l'une des revendications 1 et 2, caractérise par le fait que les deux organes d'interruption sont constitués le premier par un deuxième transistor (T2) et le second par un troisième transistor (T3).

4. Dispositif selon la revendication 3, caractérisé par le fait que le deuxième transistor (T2) est connecté de façon à être commandé par le troisième transistor (T3).

5. Dispositif selon l'une des revendications 1 et 2, caractérisé par le fiat que les deux organes d'interruption sont constitués le premier par un deuxième transistor (T2) le second par un organe temporisateur (TE).

6. Dispositif selon la revendication 5, caractérisé par le fait que l'organe temporisateur (TE) est un compteur.

7. Dispositif selon l'une des revendications 3 à 6, caractérisé par le fait qu'une seconde diode (D2) est insérée entre le point commun à la première diode (D1) et à la seconde batterie (BT2) et entre le point commun au second organe d'interruption (T3 ou TE) et à l'électrode de commande du deuxième transistor.

8. Dispositif selon la revendication 7, caractérisé par le fait que la résistance de rétroaction (R2) est connectée à l'électrode de commande du premier transistor (T1) d'une part et à une borne (UC—) du circuit de charge à travers la second diode (D2) et le second organe d'interruption (T3) d'autre part.

9. Dispositif selon l'une des revendications 1 et 2, caractérisé par le fait que le premier organe d'interruption est constitué par un premier contact (CT1) d'un relais (RI) dont l'excitation est commandée par le premier transistor (T1) et le second organe d'interruption par un deuxième contact (CT2) dudit relais.

10. Dispositif selon la revendication 9, caractérisé par le fait que la résistance de rétroaction (R2) est connectée à l'électrode de commande du premier transistor (T1) d'une part et à une borne (UC−) du circuit de charge à travers un troisième contact (CT3) dudit relais (RL) d'autre part.

11. Dispositif selon l'une des revendications précédentes, caractérisé par le fait qu'entre ladite borne d'une polarité de la première batterie (BT1) et ladite borne d'une autre polarité de la seconde batterie (BT2), on associe à la première diode (D1) un interrupteur (CT4, Th, CT11), commandé par des moyens (RL4, RL RL2) qui en provoquent l'ouverture, interrompant le courant dans la diode, lorsque les batteries sont en charge, et qui provoquent la fermeture, rétablissant le cournat dans la diode, lorsque les batteries sont en décharge.

12. Dispositif selon la revendication 11, caractérisé par le fait que ledit interrupteur est un contact (CT4) d'un relais (RL4), ledit contact étant disposé en série entre le pôle négatif de la second batterie (BT2) et la première diode (D1), la bobine d'excitation (RL4) étant connectée entre le pôle positif de la second batterie (BT2) et la cathode d'une diode (D4) dont l'anode est reliée à celle des extrémités de la résistance (R2) opposée à la diode (D1), le relais étant agencé pour que le contact (CT4) soit fermé lorsque la bobine (RL4) n'est pas excité.

13. Dispositif de commutation automatique selon la revendication 11, caractérisé par le fait que dans le cas où le premier organe d'interruption est constitué par un premier contact (CT1) d'un relais (RL) dont l'excitation est commandée par le premier transistor et le second organe d'interruption par un deuxième contact (CT2) dudit relais, ledit interrupteur est constitué par un troisième contact (CT4) du relais (RL) mettant en série la batteree (BT2) et la diode (D1) lorsque le relais (RL) n'est pas excité et mettant en liaison le pôle négatif de la batterie (BT2) avec le pôle négatif du chargeur (Ch) lorsque le relais (RL) est excité.

14. Dispositif de commutation automatique selon la revendication 11, caractérisé par le fait que la diode (D1) et ledit interrupteur sont remplacés par un thyristor (Th) dont la gâchette est reliée au point commun de deux résistances (R10 et R11) constituant, avec une diode Zener (DZ) un circuit série disposé en parallèle sur le thyristor.

15. Dispositif de commutation automatique selon la revendication 11, caractérisé par le fait que l'interrupteur est un contact (CT11) commandé par un relais (RL2) lui-même commandé par un premier transistor (T20) dont la base est reliée à la cathode de la diode (D1) par une résistance (R20), ledit relais (RL2) actionnant les organes d'interruption (I1) et (I2), par l'intermédiaire d'un circuit de confirmation de la tension de chargeur qui comprend un quatrième transistor (T21) commandé par le premier transistor (T20), et par l'intermédiaire d'un circuit à temporisation comprenant en série avec la bobine (RL2) un cinquième transistor (T22), dont la base est reliée au quatrième transistor (T21) par une diode Zener associée à un circuit à résistance (R42) et condensateur (C2), la confirmation de l'état de tension du chargeur étant assurée grâce à deux résistances (R21) et (R31) respectivement reliées entre une des bornes du chargeur et l'une des extrémités de la résistance (R20).

## Patentansprüche

1. Automatische Umschaltvorrichtung, die das parallele Aufladen zweier Batterien (BT1, BT2) durch einen Ladekreis (CH) und ihre Entladung in Reihe über einen Verbraucher (Ut) ermöglicht, mit zwei Unterbrecherorganen für den Ladekreis und einem Steuerorgan, das aus einem ersten Transistor (T1), einem Widerstand (R2) und einer Diode (D1) besteht, wobei der Transistor so geschaltet ist, daß er vom leitenden in den blockierten Zustand und umgekehrt je nach der Spannung an den Klemmen dieser Diode umschaltet, wobei die Unterbrecherorgane und der Transistor so angeordnet sind, daß die Batterien in einem ersten Zustand des Transistors parallel aufgeladen werden und in einem zweiten Zustand des Transistors in Reihe entladen werden, dadurch gekennzeichnet, daß die Diode (D1) einerseits parallel an die Basis - Emitter - Strecke des Transistors (T1) und andererseits zwischen der Klemme einer Polarität einer ersten Batterie (BT1) und der Klemme der anderen Polarität der zweiten Batterie (BT2) angeschlossen ist, so daß der Entladestrom der Batterien diese Diode in Leitrichtung durchfließt, daß der Widerstand (R2) als Rückkopplung an den Emitter des Transistors (T1) angeschlossen ist, wodurch der Leitzustand verstärkt wird, und daß die beiden Unterbrecherorgane (T2, T3; T2, TE; CT1, CT2) zwischen den jeweiligen Klemmen gleicher Polarität der beiden Batterien (BT1, BT2) angeordnet sind, so daß die Batterien parallel aufgeladen werden, wenn die Unterbrecherorgane leitend sind, und zwar die erste Batterie über das erste Unterbrecherorgan und die zweite Batterie über das zweite Unterbrecherorgan, wobei die beiden Organe vom Transistor gesteuert werden und die Lade- und Verbraucherkreise direkt mit den Klemmen der Batterien verbunden sind.

2. Vorrichtung nach Anspruch 1, dadurch gekennzeichnet, daß der erste Transistor (T1) so angeschlossen ist, daß er sich im blockierten Zustand befindet, solange die Batterien sich entladen.

3. Vorrichtung nach einem der Ansprüche 1 und 2, dadurch gekennzeichnet, daß die beiden Schaltorgane aus zwei Transistoren, einem zweiten Transistor (T2) und einem dritten Transistor (T3) bestehen.

4. Vorrichtung nach Anspruch 3, dadurch gekennzeichnet, daß der zweite Transistor (T2) so angeschlossen ist, daß er vom dritten Transistor (T3) gesteuert wird.

5. Vorrichtung nach einem der Ansprüche 1 und 2, dadurch gekennzeichnet, daß das erste Unterbrecherorgan aus einem zweiten Transistor (T2) und das zweite aus einem Verzögerungsorgan (TE) besteht.

6. Vorrichtung nach Anspruch 5, dadurch gekennzeichnet, daß das Verzögerungsorgan (TE) ein Zähler ist.

7. Vorrichtung nach einem der Ansprüche 3 bis 6, dadurch gekennzeichnet, daß eine zweite Diode (D2) zwischen dem gemeinsamen Punkt der ersten Diode (D1) und der zweiten Batterie (BT2) und dem gemeinsamen Punkt des zweiten Unterbrecherorgans (T3 oder TE) und der Steurelektrode des zweiten Transistors geschaltet ist.

8. Vorrichtung nach Anspruch 7, dadurch gekennzeichnet, daß der Rückkopplungswiderstand (R2) einerseits mit der Steuerelektrode des ersten Transistors (T1) und andererseits mit einer Klemme (UC−) des Ladeschaltkreises über die zweite Diode (D2) und das zweite Unterbrecherorgan (T3) verbunden ist.

9. Vorrichtung nach einem der Ansprüche 1 und 2, dadurch gekennzeichnet, daß das erste Unterbrecherorgan aus einem ersten Kontakt (T1) eines Relais (RL), dessen Erregung vom ersten Transistor (T1) gesteuert wird, und das zweite Unterbrecherorgan aus einem zweiten Kontakt (T2) dieses Relais besteht.

10. Vorrichtung nach Anspruch 9, dadurch gekennzeichnet, daß der Rückkopplungswiderstand (R2) einerseits mit der Steuerelektrode des ersten Transistors (T1) und andererseits mit einer Klemme (UC−) des Ladeschaltkreises über einen dritten Kontakt (CT3) des Relais (RL) verbunden ist.

11. Vorrichtung nach einem der vorhergehenden Ansprüche, dadurch gekennzeichnet, daß zwischen der Klemme einer Polarität der ersten Batterie (BT1) und der Klemme einer anderen Polarität der zweiten Batterie (BT2) der ersten Diode (D1) ein Schalter (CT4, Th, CT11) zugeordnet wird, der von Mitteln (RL4, RL, RL2) gesteuert wird, die seine Öffnung hervorrufen und den Strom in der Diode unterbrechen, wenn die Batterien geladen werden, und sein Schließen bewirken und den Stromfluß in der Diode wiederherstellen, wenn die Batterien entladen werden.

12. Vorrichtung nach Anspruch 11, dadurch gekennzeichnet, daß der Schalter der Kontakt (CT4) eines Relais (RL4) ist, wobei dieser Kontakt in Serie zwischen dem Minuspol der zweiten Batterie (BT2) und der ersten Diode (D1) angeordnet ist, die Erregerwicklung (RL4) zwischen dem Pluspol der zweiten Batterie (BT2) und der Kathode einer Diode (D4) angeschlossen ist, deren Anode mit dem der Diode abgewandten Ende des Widerstands (R2) verbunden ist, und das Relais so aufgebaut ist, daß der Kontakt (CT4) geschlossen ist, wenn die Wicklung (RL4) nicht erregt ist.

13. Automatische Umschaltvorrichtung nach Anspruch 11, dadurch gekennzeichnet, daß in dem Fall, wenn das erste Unterbrecherorgan aus einem ersten Kontakt (CT1) eines Relais (RL) besteht, dessen Erregung vom ersten Transistor gesteuert wird, und das zweite Unterbrecherorgan aus einem zweiten Kontakt (CT2) dieses Relais besteht, der Unterbrecher aus einem dritten Kontakt (CT4) des Relais (RL) gebildet wird, der die Batterie (BT2) und die Diode (D1) in Serie schaltet, wenn das Relais (RL) nicht erregt ist, und der den Minuspol der Batterie (BT2) mit dem Minuspol des Ladegeräts (Ch) verbindet, wenn das Relais (RL) erregt ist.

14. Vorrichtung zur automatischen Umschaltung nach Anspruch 11, dadurch gekennzeichnet, daß die Diode (D1) und der Unterbrecher durch einen Thyristor (Th) ersetzt sind, dessen Zündelektrode mit dem gemeinsamen Punkt von zwei Widerständen (R10 und R11) verbunden ist, die mit einer Zenerdiode (DZ) einen Serienschaltkreis bilden, der parallel zum Thyristor angeordnet ist.

15. Vorrichtung zur automatischen Umschaltung nach Anspruch 11, dadurch gekennzeichnet, daß der Unterbrecher ein Kontakt (CT11) ist, der von einem Relais (RL2) gesteuert wird, das seinerseits von einem ersten Transistor (T20) gesteuert wird, dessen Basis mit der Kathode der Diode (D1) über einen Widerstand (R20) verbunden ist, wobei das Relais (RL2) die Unterbrecherorgane (I1 und I2) über einen Bestätigungsschaltkreis der Ladegerätespannung betätigt, der einen vom ersten Transistor (T20) gesteuerten vierten Transistor (T21) aufweist, und über einen Verzögerungsschaltkreis, der in Serie mit der Wicklung (RL2) einen fünften Transistor (T22) aufweist, dessen Basis mit dem vierten Transistor (T21) über eine Zenerdiode verbunden ist, die an eine RC-Schaltkreis (R42, C2) angeschlossen ist, wobei die Bestätigung des Spannungszustands des Ladegeräts durch zwei Widerstände (R21 und R31) erfolgt, die je zwischen eine der Klemmen des Ladegeräts und eines der Enden des Widerstands (R20) geschaltet sind.

**Claims**

1. An automatic switching device permitting the charge of two batteries (BT1, BT2) in parallel by a charging circuit (Ch) and their discharge in series into a load (Ut), comprising two interrupt means in the charge circuit and a control means constituted by a first transistor (T1), a resistor (R2) and a diode (D1) in combination, the transistor being arranged to switch from the conducting to the non-conducting state and vice-versa according to the voltage existing at the terminals of said diode, the interrupt means and the transistor being arranged such that the batteries are charged parallelly with the transistor being in a first state and discharged serially with the transistor being in a second state of conduction, characterized in that the diode (D) is branched on one hand parallelly to the base-emitter circuit of that transistor (T1) and on the other hand between the terminal of one polarity of a first battery (BT1) and the terminal of the second polarity of the second battery (BT2) such that the battery discharge current passes through said diode in the direct direction, that said resistor (R2) is incorporated in a feedback loop at the emitter of the transistor (T1) such that it amplifies the conducting state, and that the two interrupt means (T2, T3; T2, TE; T1, CT2) are branched each between two terminals of even polarity of the two batteries (BT1, BT2) such that the batteries are charged parallelly when the means are in the conducting state, the first battery being charged via the first interrupt means and the second via the second interrupt means, these means being controlled by said transistor, the charging circuit and the load being directly connected to the battery terminals.

2. Device according to claim 1, characterized in that the first transistor (T1) is arranged in order to be non-conducting when the batteries are at discharge.

3. Device according to one of claims 1 and 2, characterized in that the first interrupt means is constituted by a second transistor (T2) and the second means by a third transistor (T3).

4. Device according to claim 3, characterized in that the second transistor (T2) is arranged in order to be controlled by the third transistor (T3).

5. Device according to one of claims 1 and 2, characterized in that the first interrupt means is constituted by a second transistor (T2) and the second means by a delay means (TE).

6. Device according to claim 5, characterized in that the delay means (TE) is constituted by a counter.

7. Device according to one of claims 3 to 6, characterized in that a second diode (D2) is inserted between the common point of the first diode (D1) and of the second battery (BT2) and between the common point of the second interrupt means (T3 or TE) and of the control electrode of the second transistor.

8. Device according to claim 7, characterized in that the feedback resistor (R2) is connected to the control electrode of the first transistor (T1) on one hand and to a terminal (UC—) of the charging circuit via the second diode (D2) and the second interrupt means (T3) on the other hand.

9. Device according to one of claims 1 and 2, characterized in that the first interrupt means is constituted by a first contact (CT1) of a relay (RL), the coil of which is controlled by the first transistor (T1), and that the second interrupt means is constituted by a second contact (CT2) of that relay.

10. Device according to claim 9, characterized by the fact that the feedback resistor (R2) is connected to the control electrode of the first transistor (T1) on one hand and to a terminal (UC—) of the charging circuit via a third contact (CT3) of said relay (RL) on the other hand.

11. Device according to any one of the preceding claims, characterized in that between that terminal of one polarity of the first battery (BT1) and that terminal of the other polarity of the second battery (BT2), the first diode (D1) is associated with an interrupter (CT4, Th, CT11), which is controlled by means (RL4, RL, RL2) which cause the break-up of the circuit and the interruption of the diode current, when the batteries are at charge and which cause the closing and re-establish the diode current, when the batteries are at discharge.

12. Device according to claim 11, characterized in that the interrupter is a contact (CT4) of a relay (RL4), this contact being arranged in series between the negative pole of the second battery (BT2) and the first diode (D1), the excitation coil (RL4) being arranged between the positive pole of the second battery (BT2) and the cathode of a diode (D4), the anode of which is connected to the one of the resistor (R2) terminals which is opposed to the diode (D1), the relay being arranged such that the contact (CT4) is closed when the coil (RL4) is not excited.

13. Automatic switching device according to claim 11, characterized in that when the first interrupt means is constituted by a first contact (CT1) of a relay (RL), the excitation of which is controlled by the first transistor, and the second interrupt means is constituted by a second contact (CT2) of that relay, the interrupter is constituted by a third contact (CT4) of the relay (RL) and arranges the battery (BT2) and the diode (D1) in series connection, if the relay (RL) is not excited, whereas it connects the negative pole of the battery (BT2) to the negative pole of the charger (Ch), if the relay (RL) is excited.

14. Automatic switching device according to claim 11, characterized in that the diode (D1) and that interrupter are replaced by a thyristor (Th), the firing electrode of which is connected to a common point of two resistors (R10 and R11) which constitute in combination with a Zener-diode (DZ) a series circuit which is branched in parallel to the thyristor.

15. Automatic switching device according to claim 11, characterized in that the interrupter is constituted by a contact (CT11) which is controlled by a relay (RL2), the latter being controlled by a first transistor (T20), the base of which is connected to the cathode of the diode (D1) via a resistor (R20), that relay (RL2) activating the interrupt means (I1 and I2) via a confirmation circuit of the charger voltage, this circuit comprising a fourth transistor (T21) controlled by the first transistor (T20), and via a delay circuit comprising in series arrangement with the coil (RL2) a fifth transistor (T22) the base of which is connected to the first transistor (T21) via a Zener-diode associated to a RC-circuit (R42, C2), the confirmation of the state of voltage of the charger being ascertained by two resistors (R21 and R31), each of which is connected on one hand to one of the charger terminals and on the other hand to one of the resistor (R20) terminals.

# FIG.1

# FIG.2

# FIG.3

# FIG.4

4

# FIG.5

# FIG.6

# FIG.7